# EUROPEAN PATENT APPLICATION

(11) **EP 4 459 978 A1**
(43) Date of publication of application: **06.11.2024**
(21) Application number: 22914929.9
(22) Date of filing: 28.12.2022
(51) Int. Cl.: H04N 7/01

(54) **DISCRETE GRAPHICS FRAME INTERPOLATION CIRCUIT, METHOD, AND APPARATUS, CHIP, ELECTRONIC DEVICE, AND MEDIUM**

(30) Priority: 28.12.2021 CN 202111630090
(71) Applicant: VIVO MOBILE COMMUNICATION CO., LTD., Dongguan, Guangdong 523863 (CN)
(72) Inventor: ZHANG, Biao, Dongguan, Guangdong 523863 (CN); XIONG, Jianqing, Dongguan, Guangdong 523863 (CN)
(74) Representative: Murgitroyd & Company
(86) International application number: PCT/CN2022/142886
(87) International publication number: WO 2023/125677

(57) **Abstract**

This application discloses an independent display frame interpolation circuit, method, and apparatus, a chip, an electronic device, and a medium, and pertains to the field of communications technologies. The independent display frame interpolation circuit includes a System-on-a-Chip and an independent display chip. The System-on-a-Chip is configured to: generate first data based on first content to be displayed, and send the first data to the independent display chip in a case that a target TE signal sent by the independent display chip is received, where a frame rate of the first data is smaller than a frame rate of the first content; and the independent display chip is configured to perform frame interpolation processing on the first data to obtain second data, and a frame rate of the second data is greater than or equal to the frame rate of the first content.

## Description

### CROSS-REFERENCE TO RELATED APPLICATIONS

This application claims priority to Chinese Patent Application No. 202111630090.9 filed in China on December 28, 2021, which is incorporated herein by reference in its entirety.

### TECHNICAL FIELD

This application pertains to the field of communications technologies, and in particular, to an independent display frame interpolation circuit, method, and apparatus, a chip, an electronic device, and a medium.

### BACKGROUND

With the development of terminal technologies, users have increasingly high requirements for the quality of images displayed on the electronic device. At present, some electronic devices can support the display of videos, games, and other images with high frame rate. However, in the process of displaying videos, games, and other images with high frame rate, the display frame rate of the electronic device is affected due to the high power consumption of the electronic device, which leads to the low fluency of the image displayed on the electronic device.

### SUMMARY

Embodiments of this application aim to provide an independent display frame interpolation circuit, method, and apparatus, a chip, an electronic device, and a medium.

According to a first aspect, an embodiment of this application provides an independent display frame interpolation circuit, where the independent display frame interpolation circuit includes a System-on-a-Chip and an independent display chip. The System-on-a-Chip is configured to: generate first data based on first content to be displayed, and send the first data to the independent display chip in a case that a target display frame rate synchronization (TE) signal sent by the independent display chip is received, where a frame rate of the first data is smaller than a frame rate of the first content; and the independent display chip is configured to perform frame interpolation processing on the first data to obtain second data, and a frame rate of the second data is greater than or equal to the frame rate of the first content.

According to a second aspect, an embodiment of this application provides an independent display frame interpolation method, and the independent display frame interpolation method includes: generating first data based on first content to be displayed on the electronic device through a System-on-a-Chip in the electronic device, where a frame rate of the first data is smaller than a frame rate of the first content; in a case that the System-on-a-Chip receives a target display frame rate synchronization (TE) signal sent by an independent display chip in the electronic device, sending the first data to the independent display chip through the System-on-a-Chip; and performing frame interpolation processing on the first data through the independent display chip to obtain second data, where a frame rate of the second data is greater than or equal to the frame rate of the first content.

According to a third aspect, an embodiment of this application provides an independent display frame interpolation apparatus, where the independent display frame interpolation apparatus includes a generating module, a sending module, and a processing module. The generating module is configured to generate first data based on first content to be displayed on the electronic device through a System-on-a-Chip in the electronic device, where a frame rate of the first data is smaller than a frame rate of the first content. The sending module is configured to: in a case that the System-on-a-Chip receives a target display frame rate synchronization (TE) signal sent by an independent display chip in the electronic device, send the first data to the independent display chip through the System-on-a-Chip. The processing module is configured to perform frame interpolation processing on the first data through the independent display chip to obtain second data, where a frame rate of the second data is greater than or equal to the frame rate of the first content.

According to a fourth aspect, an embodiment of this application provides a System-on-a-Chip, where the System-on-a-Chip includes a processor and a communications interface, the communications interface is coupled to the processor, the processor is configured to generate first data based on first content to be displayed on an electronic device, where a frame rate of the first data is smaller than a frame rate of the first content, and the communications interface is configured to: in a case that a target display frame rate synchronization (TE) signal sent by an independent display chip in the electronic device is received, send the first data to the independent display chip.

According to a fifth aspect, an embodiment of this application provides an independent display chip, where the independent display chip includes a processor and a communications interface, the communications interface is coupled to the processor, the communications interface is configured to: send a target display frame rate synchronization (TE) signal to a System-on-a-Chip in an electronic device, and receive first data sent by the System-on-a-Chip, where the first data is data generated by the System-on-a-Chip based on first content to be displayed on the electronic device, a frame rate of the first data is smaller than a frame rate of the first content; and the processor is configured to perform frame interpolation processing on the first data to obtain second data, and a frame rate of the second data is greater than or equal to the frame rate of the first content.

According to a sixth aspect, an embodiment of this application provides an electronic device, where the electronic device includes the independent display frame interpolation circuit according to the first aspect, or includes the System-on-a-Chip according to the fourth aspect and the independent display chip according to the fifth aspect.

According to a seventh aspect, an embodiment of this application provides an electronic device. The electronic device includes a processor and a memory. The processor stores a program or an instruction executable on the processor. When the program or the instruction is executed by the processor, steps of the method according to the second aspect are implemented by the electronic device.

According to an eighth aspect, an embodiment of this application provides a readable storage medium. The readable storage medium stores a program or an instruction, and when the program or the instruction is executed by a processor, steps of the method according to the second aspect are implemented by the electronic device.

According to a ninth aspect, an embodiment of this application provides a computer program product. The program product is stored in a storage medium, and the program product is executed by at least one processor to implement the method according to the second aspect by the electronic device.

In the embodiments of this application, the System-on-a-Chip can generate the first data based on the first content to be displayed, and the frame rate of the first data is smaller than that of the first content. Then, in a case that the System-on-a-Chip receives the target TE signal sent by the independent display chip, the System-on-a-Chip can send the first data to the independent display chip, so that the independent display chip performs frame interpolation processing on the first data to obtain second data, and a frame rate of the second data is greater than or equal to that of the first content. In this solution, the frame rate of the first data generated by the System-on-a-Chip is smaller than that of the first content to be displayed, that is, the output frame rate of the System-on-a-Chip is reduced. Then, the independent display chip can perform frame interpolation processing on the first data to obtain the second data, so as to improve or maintain the frame rate of the content to be displayed on the electronic device. In this way, the output frame rate of the System-on-a-Chip is reduced, and the problem that high power consumption of the System-on-a-Chip affects a frame interpolation function of the independent display chip can be avoided, thereby improving the fluency of the image displayed on the electronic device.

### BRIEF DESCRIPTION OF DRAWINGS

FIG. 1 is a first schematic diagram of an independent display frame interpolation method according to an embodiment of this application;
FIG. 2 is a second schematic diagram of an independent display frame interpolation method according to an embodiment of this application;
FIG. 3 is a schematic diagram of a structure of an independent display frame interpolation circuit according to an embodiment of this application;
FIG. 4 is a schematic diagram of an architecture of an independent display chip according to an embodiment of this application;
FIG. 5 is a signal interaction diagram when an independent display frame interpolation function is not enabled according to an embodiment of this application;
FIG. 6 is a signal interaction diagram when an independent display frame interpolation function is enabled according to an embodiment of this application;
FIG. 7 is a flowchart of an independent display frame interpolation method according to an embodiment of this application;
FIG. 8 is a schematic diagram of a structure of an independent display frame interpolation apparatus according to an embodiment of this application;
FIG. 9 is a first schematic diagram of a hardware structure of an electronic device according to an embodiment of this application; and
FIG. 10 is a second schematic diagram of a hardware structure of an electronic device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

With reference to the accompanying drawings, the independent display frame interpolation method provided in the embodiments of this application is described in detail by using specific embodiments and application scenarios thereof.

At present, some electronic devices can support the display of videos, games, and other images with high frame rate. However, in the process of displaying videos, games, and other images with high frame rate, the display frame rate of the electronic device is affected due to the high power consumption of the electronic device, which leads to the low fluency of the image displayed on the electronic device.

To solve the above technical problems, in the embodiments of this application, an output frame rate of the System-on-a-Chip (System-on-a-Chip, SoC) can be reduced, and then the frame is interpolated to a target frame rate (greater than or equal to a frame rate of currently displayed content) through an independent display chip, so that the power consumption of the SoC can be reduced while a frame rate of the content displayed on the electronic device is improved or maintained, so as to stabilize the output frame rate of the SoC, thereby improving the fluency of the image displayed on the electronic device.

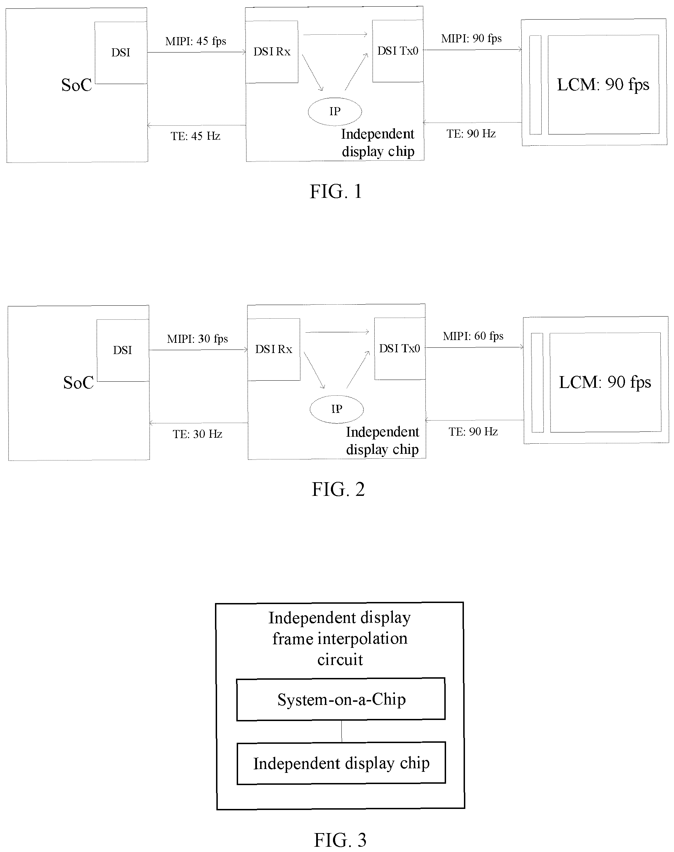

In a scenario, as shown in FIG. 1, a display frame rate of a liquid crystal display module (Liquid Crystal Display Module, LCM) is 90 fps, and a frame rate of a program source (that is, a frame rate of content to be displayed on the electronic device) is 60 fps. When the frame rate of the content to be displayed on the electronic device needs to be improved, the LCM sends a 90-Hz TE signal to the independent display chip for frame synchronization. The independent display chip adjusts the TE signal to be in 45 Hz and sends the TE signal to the SoC, and in addition, the SoC processes generated frame data from 60 fps to 45 fps and transmits the frame data to the independent display chip, so that the independent display chip interpolates frame on the 45-fps frame data to be 90-fps frame data and transmits the frame data to the LCM. As a result, the LCM displays content corresponding to the 90-fps frame data. In this way, while improving the frame rate of the content to be displayed on the electronic device, the power consumption of the SoC is reduced to stabilize the output frame rate of the SoC, thereby improving the fluency of the image displayed on the electronic device.

In another scenario, as shown in FIG. 2, the display frame rate of the LCM is 90 fps, and a frame rate of a program source (that is, a frame rate of content to be displayed on the electronic device) is 60 fps. When the frame rate of the content to be displayed on the electronic device is maintained to be constant, the LCM sends a 90-Hz TE signal to the independent display chip for frame synchronization. The independent display chip adjusts the TE signal to be in 30 Hz and sends the TE signal to the SoC, and in addition, the SoC processes generated frame data from 60 fps to 30 fps and transmits the frame data to the independent display chip (or the independent display chip adjusts the TE signal to be in 45 Hz and sends the TE signal to the SoC, and the SoC processes generated frame data from 60 fps to 45 fps and transmits the frame data to the independent display chip, which can be adjusted according to the needs of power consumption and effect), so that the independent display chip interpolates frame on the 30-fps frame data to be 60-fps frame data and transmits the frame data to the LCM. As a result, the LCM displays content corresponding to the 60-fps frame data. In this way, while maintaining the frame rate of the content to be displayed on the electronic device, the power consumption of the SoC is reduced to stabilize the output frame rate of the SoC, thereby improving the fluency of the image displayed on the electronic device.

### Embodiment 1

An embodiment of this application provides an independent display frame interpolation circuit, and FIG. 3 is a schematic diagram of a structure of an independent display frame interpolation circuit according to an embodiment of this application. As shown in FIG. 3, the independent display frame interpolation circuit provided in this embodiment of this application may include a System-on-a-Chip and an independent display chip.

The System-on-a-Chip is configured to: generate first data based on first content to be displayed, and send the first data to the independent display chip in a case that a target TE signal sent by the independent display chip is received, where a frame rate of the first data is smaller than a frame rate of the first content. The independent display chip is configured to perform frame interpolation processing on the first data to obtain second data, and a frame rate of the second data is greater than or equal to the frame rate of the first content.

It should be noted that as an external special image processing unit, the independent display chip can bring display enhancement effects such as a higher frame rate, a higher resolution, a higher color saturation and contrast. Although some electronic devices support a high frame rate (for example, 120/90 Hz), the actually displayed content does not achieve a real high frame rate, and only relies on a graphics processing unit (Graphics Processing Unit, GPU) or a display driving integrated circuit for simple image repetition, and the actual experience is still at a low frame rate. The independent display chip can calculate a motion feature of the image by using data of two frames before and after, and simulate and generate a middle image to realize dynamic frame compensation, so as to enable the content displayed on the electronic device to realize real high frame rate.

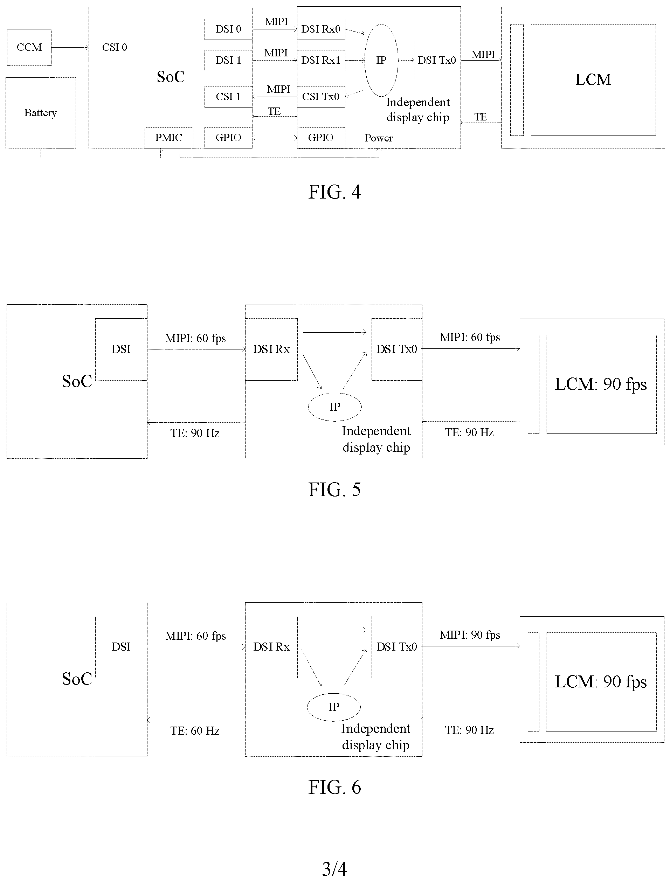

FIG. 4 is a schematic diagram of an architecture of an independent display chip. The independent display chip has two display serial interface (Display Serial Interface, DSI), and data transmission is realized through a mobile industry processor interface (Mobile Industry Processor Interface, MIPI) protocol, which can work in a double-channel MIPI mode and a single-channel MIPI mode. In the dual-channel mode, the display content can be divided into a user interface (User Interface, UI) layer and a video (video) layer. The UI layer and the video layer are separately transmitted to the independent display chip through the DSI interface, and processed by various functional modules in the independent display chip (such as frame interpolation, super resolution, noise reduction, color enhancement, and the like) to synthesize frame data. After necessary color processing, the display content is transmitted to the liquid crystal display module (Liquid Crystal Display Module, LCM) through a display serial interface-transmit (DSI-Transmit, DSI-Tx) 0. In the single-channel mode, the display content can be sent to the independent display chip via the DSI 0 by the SoC after synthesizing the frame data, so that the independent display chip can be transmitted to the liquid crystal display module after being processed correspondingly.

In a photographing scenario, content photographed by a camera in the electronic device is transmitted to the SoC through a camera serial interface (Camera Serial Interface, CSI) 0, and the SoC transmits photographed content to the independent display chip through the DSI interface. After chip processing is performed on the independent display chip, the processed content is transmitted to the SoC and the liquid crystal display module through the CSI Tx0 and DSI Tx0 interfaces respectively. The SoC can store the processed content, and the liquid crystal display module can preview and display the processed content in real time.

A function of each interface is as follows:
DSI 0: output UI or video content;
Display serial interface-receive (DSI-Receive, DSI-Rx) 0: receive content transmitted by the DSI 0;
DSI 1: output UI or video content;
DSI Rx1: receive content transmitted by the DSI 1;
CSI 0: receive content shot by a camera;
CSI 1: receive content processed by the independent display chip;
DSI Tx0: output the display content to a display;
CSI Tx0: output content processed by the independent display chip to the SoC;
TE: display a frame rate synchronization signal;
MIPI: a signal transmission protocol;
General-purpose input/output port (GPIO): transmit other control signals and data signals between the independent display chip and the processor;
Intellectual property (Intellectual Property, IP): a function processing module inside the independent display chip (such as frame interpolation, super resolution, noise reduction, color enhancement, UI and video content superposition, and the like);
Power management integrated circuit (Power Management Integrated Circuit, PMIC): include a battery management chip, an independent display power supply power management chip and other module power management chips/modules;
Battery: a battery of an electronic device; and
SoC: System-on-a-Chip, including a processor core, a digital signal processor, a memory module, a communications interface, power management, radio frequency front-end and other modules.

FIG. 5 is a signal interaction diagram when the electronic device does not enable an independent display frame interpolation function. A frame rate of the display is 90 fps. When the electronic device does not enable the independent display frame interpolation function, the LCM sends a 90-Hz TE signal to the independent display chip for frame synchronization, and the independent display chip also synchronously generates a 90-Hz TE signal and sends the TE signal to the SoC. Because the program source is only 60 fps, the GPU will generate 60-fps frame data which is transmitted to the independent display chip, and then the independent display chip directly transmits the frame data to the display. In this case, real content displayed on the display is only 60 fps, which cannot reach 90 fps of the display.

FIG. 6 is a signal interaction diagram when the electronic device enables an independent display frame interpolation function. A frame rate of the display is 90 fps. When the electronic device enables the independent display frame interpolation function (for example, interpolating frame on 60 fps to be 90 fps), the LCM sends a 90-Hz TE signal to the independent display chip for frame synchronization, and the independent display chip synchronously generates a 60-Hz TE signal and sends the TE signal to the SoC. The SoC will generate 60-fps frame data which is transmitted to the independent display chip, and then the independent display chip interpolates frame on 60 fps to be 90 fps, and transmits the frame data to the display. In this case, the content displayed on the display can reach real 90 fps.

Optionally, in this embodiment of this application, the first content may be a video image, a game image, or the like. This may be specifically determined according to an actual use requirement, and is not limited in this embodiment of this application.

Optionally, in this embodiment of this application, the System-on-a-Chip may perform frame loss processing on the first content, or may perform any other possible processing on the first content to obtain the first data.

Optionally, in this embodiment of this application, the System-on-a-Chip is specifically configured to perform frame loss processing on the first content based on a preset frame rate, to obtain first data at the preset frame rate.

Optionally, in this embodiment of this application, the preset frame rate is smaller than a frame rate of the first content. In addition, the preset frame rate can be the default of the electronic device or preset by the user. This may be specifically determined according to an actual use requirement, and is not limited in this embodiment of this application.

For example, if the preset frame rate is 45 fps, and the frame rate of the first content is 60 fsp, the System-on-a-Chip will lose 1-fps data every time when the System-on-a-Chip processes 3-fps data. The lost frame of data does not need to be processed, and the data actually processed by the System-on-a-Chip is 45 fps.

For another example, if the preset frame rate is 30 fps, and the frame rate of the first content is 60 fsp, the System-on-a-Chip will lose 1-fps data every time when the System-on-a-Chip processes 1-fps data. The lost frame of data does not need to be processed, and the data actually processed by the System-on-a-Chip is 30 fps.

In this embodiment of this application, the System-on-a-Chip can perform frame loss processing on the first content based on the preset frame rate, to obtain the first data at the preset frame rate, that is, reduce the output frame rate of the System-on-a-Chip, so that the power consumption of the System-on-a-Chip can be reduced to stabilize the output frame rate of the System-on-a-Chip, and the problem that high power consumption of the System-on-a-Chip affects the independent display frame interpolation function can be avoided, thereby improving the fluency of the image displayed on the electronic device.

Optionally, in this embodiment of this application, the target TE signal may be one TE signal or include a plurality of TE signals. This may be specifically determined according to an actual use requirement, and is not limited in this embodiment of this application.

Optionally, in this embodiment of this application, the System-on-a-Chip is further configured to send a first instruction to the independent display chip, where the first instruction includes a preset frame rate. The independent display chip is further configured to: generate the target TE signal, and send the target TE signal to the System-on-a-Chip, where a frequency value of the target TE signal is equal to a value of the preset frame rate.

In this embodiment of this application, the System-on-a-Chip can send a first instruction including a preset frame rate to the independent display chip, so that the independent display chip can generate a TE signal with a frequency value equal to the value of the preset frame rate, and send the TE signal to the System-on-a-Chip. In this way, because the System-on-a-Chip sends data at the preset frame rate to the independent display chip, and the preset frame rate is smaller than the frame rate of the first content, that is, the electronic device reduces the power consumption of the System-on-a-Chip by reducing the output frame rate of the System-on-a-Chip, and stabilizes the output frame rate of the System-on-a-Chip, thereby improving the fluency of the image displayed on the electronic device.

Optionally, in this embodiment of this application, the first instruction further includes a target frame rate. The independent display chip is specifically configured to perform frame interpolation processing on the first data by using the target frame rate, to obtain the second data.

It can be understood that the System-on-a-Chip sends the first instruction including the preset frame rate and the target frame rate to the independent display chip, so that the independent display chip enters a mode in which "interpolating frame on the preset frame rate to be the target frame rate", and when the independent display chip receives the first data, the independent display chip can perform frame interpolation processing on the first data to obtain second data at the target frame rate.

Optionally, in this embodiment of this application, the independent display chip can perform other processing (such as super resolution, noise reduction, color enhancement, and the like) on the first data while performing frame interpolation processing, and finally obtain the second data.

Optionally, in this embodiment of this application, the frame rate of the second data may be preset by the user, or may be the default of the electronic device. This may be specifically determined according to an actual use requirement, and is not limited in this embodiment of this application.

Optionally, in this embodiment of this application, in an implementation, the frame rate of the second data may be greater than that of the first content in a case of a high frame rate mode; and the frame rate of the second data may be equal to the frame rate of the first content in a case of a power saving mode.

In this embodiment of this application, the independent display chip can perform frame interpolation processing on the first data with a frame rate smaller than that of the first content, to obtain the second data with a frame rate greater than or equal to that of the first content, so as to improve or maintain the frame rate of the content displayed on the electronic device while reducing the power consumption of the System-on-a-Chip, thereby improving the fluency of the image displayed on the electronic device.

Optionally, in this embodiment of this application, the target TE signal includes a plurality of TE signals. The System-on-a-Chip is specifically configured to send one frame of data in the first data to the independent display chip every time when the System-on-a-Chip receives one TE signal, so as to send a plurality of frames of data in the first data to the independent display chip.

Optionally, in this embodiment of this application, the TE signal is one TE signal in the plurality of TE signals.

Optionally, in this embodiment of this application, the System-on-a-Chip can send a first frame of data in the first data to the independent display chip when the System-on-a-Chip receives a first TE signal, the System-on-a-Chip can send a second frame of data in the first data to the independent display chip when the System-on-a-Chip receives a second TE signal, ..., and so on, until the System-on-a-Chip sends all frames of data in the first data to the independent display chip.

Optionally, in this embodiment of this application, every time when receiving one frame of data in the first data, the independent display chip processes the frame of data, and after the processing of the frame of data is completed, the independent display chip sends one TE signal to the System-on-a-Chip, so as to process all frames of data in the first data. It can be understood that each TE signal corresponds to one frame of data in the first data.

In this embodiment of this application, the independent display chip can send one TE signal to the System-on-a-Chip, and then the System-on-a-Chip sends one frame of data to the independent display chip. Thus, every time when the System-on-a-Chip receives one TE signal, the System-on-a-Chip sends one frame of data in the first data to the independent display chip, and finally the System-on-a-Chip sends all frames of data in the first data to the independent display chip, thus avoiding a case that the independent display chip receives a next frame of data before completing processing of one frame of data, thus ensuring the timing of data processing performed by the System-on-a-Chip and the independent display chip.

Optionally, in this embodiment of this application, the independent display frame interpolation circuit further includes a display unit. The independent display chip is further configured to: in a case that a first TE signal sent by a display unit is received, send second data to the display unit, where a frequency value of the first TE signal is greater than or equal to a value of the frame rate of the second data. The display unit is configured to display second content based on the second data.

Optionally, in this embodiment of this application, the first TE signal may be one TE signal or include a plurality of TE signals. This may be specifically determined according to an actual use requirement, and is not limited in this embodiment of this application.

Optionally, in this embodiment of this application, if the first TE signal includes a plurality of TE signals, every time when the independent display chip receives one TE signal in the first TE signal, the independent display chip sends one frame of data in the second data to the display unit, so as to send a plurality of frames of data in the second data to the display unit.

It should be noted that for the method of sending the second data to the display unit by the independent display chip, refer to the method of sending the first data to the independent display chip by the System-on-a-Chip in the above embodiment, and details are not described herein again.

Optionally, in this embodiment of this application, each TE signal in the first TE signal corresponds to one frame of data in the second data.

Optionally, in this embodiment of this application, when the second data includes a plurality of frames of data, the independent display chip can send a plurality of frames of data to the display unit in turn, and then the display unit displays content corresponding to each frame of data in turn, so that the display unit displays the second content.

It should be noted that when the frequency value of the first TE signal is equal to the value of the frame rate of the second data, every time when receiving one frame of data in the second data, the display unit displays content corresponding to the frame of data. In a case that the frequency value of the first TE signal is greater than the value of the frame rate of the second data, after the display unit sends one TE signal in the first TE signal, there may be a case in which one frame of data in the second data is not received. In this case, the display unit can display content corresponding to frame data received by the display unit for the last time.

It can be understood that when the second data includes a plurality of frames of data, for target frame data in the plurality of frames of data, the display unit displays content corresponding to frame data received by the display unit for the last time when the target frame data is not received by the display unit.

In this embodiment of this application, the display unit can receive the second data sent by the independent display chip and display second content corresponding to the second data, that is, the content with a high frame rate is displayed or the content displayed by the display unit is maintained. In this way, the problem that high power consumption of the System-on-a-Chip affects the frame interpolation function of the independent display chip is avoided, thereby improving the fluency of the image displayed on the electronic device.

### Embodiment 2

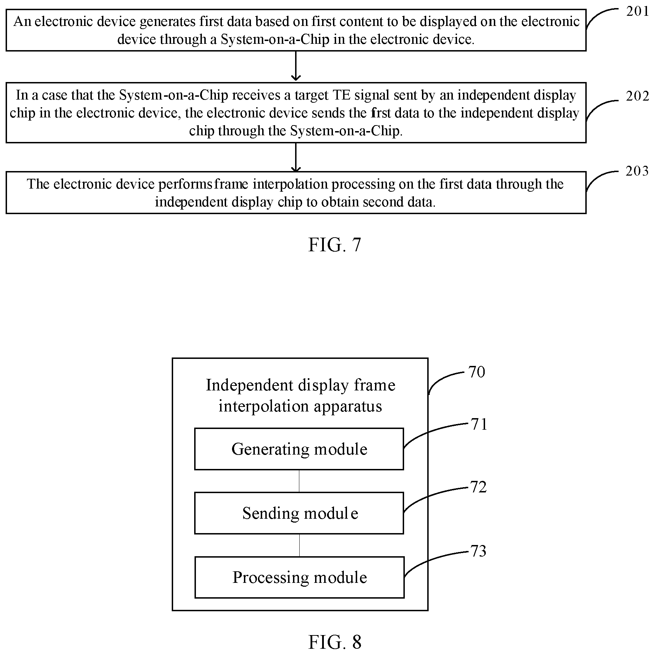

An embodiment of this application provides an independent display frame interpolation method. FIG. 7 is a flowchart of an independent display frame interpolation method according to an embodiment of this application, and the method can be applied to an electronic device. As shown in FIG. 7, the independent display frame interpolation method provided in this embodiment of this application may include the following step 201 to step 203.

Step 201. The electronic device generates first data based on first content to be displayed on the electronic device through a System-on-a-Chip in the electronic device.

In this embodiment of this application, the frame rate of the first data is smaller than a frame rate of the first content.

In this embodiment of this application, the electronic device can generate the first data based on the first content (such as video images or game images) to be displayed on the electronic device through the System-on-a-Chip, and the frame rate of the first data is smaller than that of the first content, that is, the output frame rate of the System-on-a-Chip is reduced. Then, in a case that the System-on-a-Chip receives the target TE signal sent by the independent display chip in the electronic device, the electronic device sends the first data to the independent display chip through the System-on-a-Chip, so that the independent display chip performs frame interpolation processing on the first data to obtain second data, and a frame rate of the second data is greater than or equal to that of the first content, that is, a frame rate of the content displayed on the electronic device is improved or maintained.

It should be noted that, for the description of the independent display chip, the System-on-a-Chip, the first content, and the like, refer to related description in Embodiment 1. Details are not described herein again.

Optionally, in this embodiment of this application, the electronic device may perform frame loss processing on the first content through the System-on-a-Chip, or may also perform any other possible processing on the first content through the System-on-a-Chip, to obtain the first data.

Optionally, in this embodiment of this application, the foregoing step 201 can be specifically implemented by performing the following step 201a.

Step 201a. The electronic device performs frame loss processing on the first content based on a preset frame rate through the System-on-a-Chip, to obtain first data at the preset frame rate.

In this embodiment of this application, the preset frame rate is smaller than a frame rate of the first content.

It should be noted that for description of the preset frame rate, frame loss processing, and the like, refer to related description in Embodiment 1. Details are not described herein again.

In this embodiment of this application, the electronic device can perform frame loss processing on the first content based on the preset frame rate through the System-on-a-Chip, to obtain the first data at the preset frame rate, that is, reduce the output frame rate of the System-on-a-Chip, so that the power consumption of the System-on-a-Chip can be reduced to stabilize the output frame rate of the System-on-a-Chip, and the problem that high power consumption of the System-on-a-Chip affects the independent display frame interpolation function can be avoided, thereby improving the fluency of the image displayed on the electronic device.

Step 202. In a case that the System-on-a-Chip receives a target TE signal sent by an independent display chip in the electronic device, the electronic device sends the first data to the independent display chip through the System-on-a-Chip.

Optionally, in this embodiment of this application, the independent display chip in the electronic device may send the target TE signal to the System-on-a-Chip, so that the electronic device sends the first data to the independent display chip through the System-on-a-Chip.

Optionally, in this embodiment of this application, the target TE signal may be one TE signal or include a plurality of TE signals. This may be specifically determined according to an actual use requirement, and is not limited in this embodiment of this application.

Optionally, in this embodiment of this application, the target TE signal includes a plurality of TE signals. The foregoing step 202 may be specifically implemented by the following step 202a.

Step 202a. The electronic device sends one frame of data in the first data to the independent display chip through the System-on-a-Chip every time when the System-on-a-Chip receives one TE signal, so as to send a plurality of frames of data in the first data to the independent display chip through the System-on-a-Chip.

It should be noted that, for the description of the TE signal, the first data, and the like, refer to related description in Embodiment 1. Details are not described herein again.

In this embodiment of this application, the electronic device sends one TE signal to the System-on-a-Chip through the independent display chip, and then the electronic device sends one frame of data to the independent display chip through the System-on-a-Chip. Thus, every time when the System-on-a-Chip receives one TE signal, the electronic device sends one frame of data in the first data to the independent display chip through the System-on-a-Chip, and finally sends all frames of data in the first data to the independent display chip through the System-on-a-Chip, thus avoiding a case that the independent display chip receives a next frame of data before completing processing of one frame of data, thus ensuring the timing of data processing performed by the System-on-a-Chip and the independent display chip.

Step 203. The electronic device performs frame interpolation processing on the first data through the independent display chip to obtain second data.

In this embodiment of this application, the frame rate of the second data is greater than or equal to a frame rate of the first content.

It should be noted that, for the description of frame interpolation processing, the second data, and the like, refer to related description in Embodiment 1. Details are not described herein again.

Optionally, in this embodiment of this application, before step 202, the independent display frame interpolation method provided in this embodiment of this application further includes the following step 301 and step 302.

Step 301. The electronic device sends a first instruction to the independent display chip through the System-on-a-Chip.

In this embodiment of this application, the first instruction includes a preset frame rate.

Step 302. The electronic device generates a target TE signal through the independent display chip, and sends the target TE signal to the System-on-a-Chip through the independent display chip.

In this embodiment of this application, the frequency value of the target TE signal is equal to the value of the preset frame rate.

In this embodiment of this application, the electronic device can send a first instruction including a preset frame rate to the independent display chip through the System-on-a-Chip, so that the electronic device can generate a TE signal with a frequency value equal to the value of the preset frame rate through the independent display chip, and send the TE signal to the System-on-a-Chip through the independent display chip. In this way, the electronic device can send data at the preset frame rate to the independent display chip through the System-on-a-Chip, and because the preset frame rate is smaller than the frame rate of the first content, that is, the electronic device reduces the power consumption of the System-on-a-Chip by reducing the output frame rate of the System-on-a-Chip, and stabilizes the output frame rate of the System-on-a-Chip, thereby improving the fluency of the image displayed on the electronic device.

Optionally, in this embodiment of this application, the first instruction further includes a target frame rate. The foregoing step 203 may be specifically implemented by the following step 203a.

Step 203a. The electronic device performs frame interpolation processing on the first data through the independent display chip by using the target frame rate, to obtain the second data.

It should be noted that for description of the target frame rate and the like, refer to related description in Embodiment 1. Details are not described herein again.

In this embodiment of this application, the electronic device can perform frame interpolation processing on the first data with a frame rate smaller than that of the first content through the independent display chip, to obtain the second data with a frame rate greater than or equal to that of the first content. In this way, the electronic device can improve or maintain the frame rate of the content displayed on the electronic device while reducing the power consumption of the System-on-a-Chip, thereby improving the fluency of the image displayed on the electronic device.

According to the independent display frame interpolation method provided in this embodiment of this application, the electronic device can generate the first data based on the first content to be displayed on the electronic device through the System-on-a-Chip, and the frame rate of the first data is smaller than that of the first content. Then, in a case that the System-on-a-Chip receives the target TE signal sent by the independent display chip in the electronic device, the electronic device sends the first data to the independent display chip through the System-on-a-Chip, so that the independent display chip performs frame interpolation processing on the first data to obtain second data, and a frame rate of the second data is greater than or equal to that of the first content. In this solution, the frame rate of the first data generated by the System-on-a-Chip is smaller than that of the first content to be displayed on the electronic device, that is, the output frame rate of the System-on-a-Chip is reduced. Then, the independent display chip can perform frame interpolation processing on the first data to obtain the second data, so as to improve or maintain the frame rate of the content to be displayed on the electronic device. In this way, the output frame rate of the System-on-a-Chip is reduced, and the problem that high power consumption of the System-on-a-Chip affects the independent display frame interpolation function can be avoided, thereby improving the fluency of the image displayed on the electronic device.

Optionally, in this embodiment of this application, after step 203, the independent display frame interpolation method provided in this embodiment of this application further includes the following step 401 and step 402.

Step 401. In a case that the independent display chip receives a first TE signal sent by a display unit in the electronic device, the electronic device sends second data to the display chip through the independent display chip.

In this embodiment of this application, a frequency value of the first TE signal is greater than or equal to a value of the frame rate of the second data.

It should be noted that, for the description of the display unit, the first TE signal, and the like, refer to related description in Embodiment 1. Details are not described herein again.

Step 402. The electronic device displays second content based on the second data through the display unit.

It should be noted that, for the description of the second data, the second content, and the like, refer to related description in Embodiment 1. Details are not described herein again.

In this embodiment of this application, the electronic device can receive the second data sent by the independent display chip through the display unit and display second content corresponding to the second data, that is, the content with a high frame rate is displayed or the content displayed by the display unit is maintained through the display unit. In this way, the problem that high power consumption of the System-on-a-Chip affects the frame interpolation function of the independent display chip is avoided, thereby improving the fluency of the image displayed on the electronic device.

The independent display frame interpolation method provided in this embodiment of this application may be executed by an independent display frame interpolation apparatus. In this embodiment of this application, an example in which the independent display frame interpolation apparatus performs the independent display frame interpolation method is used to describe the independent display frame interpolation apparatus provided in this embodiment of this application.

FIG. 8 is a schematic diagram of a possible structure of an independent display frame interpolation apparatus according to an embodiment of this application. As shown in FIG. 8, the independent display frame interpolation apparatus 70 may include a generating module 71, a sending module 72, and a processing module 73.

The generating module 71 is configured to generate first data based on first content to be displayed on the electronic device through a System-on-a-Chip in the electronic device, where a frame rate of the first data is smaller than a frame rate of the first content. The sending module 72 is configured to: in a case that the System-on-a-Chip receives a target display frame rate synchronization (TE) signal sent by an independent display chip in the electronic device, send the first data to the independent display chip through the System-on-a-Chip. The processing module 73 is configured to perform frame interpolation processing on the first data through the independent display chip to obtain second data, where a frame rate of the second data is greater than or equal to the frame rate of the first content.

According to the independent display frame interpolation apparatus provided in this embodiment of this application, the frame rate of the first data generated by the System-on-a-Chip is smaller than that of the first content displayed on the independent display frame interpolation apparatus, that is, the output frame rate of the System-on-a-Chip is reduced. Then, the independent display chip can perform frame interpolation processing on the first data to obtain the second data, so as to improve or maintain the frame rate of the content to be displayed on the independent display frame interpolation apparatus. In this way, the output frame rate of the System-on-a-Chip is reduced, and the problem that high power consumption of the System-on-a-Chip affects the independent display frame interpolation function can be avoided, thereby improving the fluency of the image displayed on the independent display frame interpolation apparatus.

In a possible implementation, the generating module 71 is specifically configured to perform frame loss processing on the first content based on a preset frame rate through the System-on-a-Chip, to obtain first data at the preset frame rate.

In a possible implementation, the sending module 72 is further configured to: in a case that the System-on-a-Chip receives a target TE signal sent by an independent display chip in the electronic device, before sending the first data to the independent display chip through the System-on-a-Chip, send a first instruction to the independent display chip through the System-on-a-Chip, where the first instruction includes a preset frame rate. The generating module 71 is further configured to generate a target TE signal through the independent display chip. The sending module 72 is further configured to send the target TE signal to the System-on-a-Chip through the independent display chip, where a frequency value of the target TE signal is equal to a value of the preset frame rate.

In a possible implementation, the first instruction further includes a target frame rate. The processing module 73 is specifically configured to perform frame interpolation processing on the first data through the independent display chip by using the target frame rate, to obtain the second data.

In a possible implementation, the target TE signal includes a plurality of TE signals. The sending module 72 is specifically configured to send one frame of data in the first data to the independent display chip through the System-on-a-Chip every time when the System-on-a-Chip receives one TE signal, so as to send a plurality of frames of data in the first data to the independent display chip through the System-on-a-Chip.

In a possible implementation, the independent display frame interpolation apparatus 70 further includes a display module. The sending module 72 is further configured to: after performing frame interpolation processing on the first data through the independent display chip to obtain second data, in a case that the independent display chip receives a first TE signal sent by a display unit in the electronic device, send the second data to the display unit through the independent display chip, where a frequency value of the first TE signal is greater than or equal to a value of the frame rate of the second data. The display module is configured to display second content based on the second data through the display unit.

The independent display frame interpolation apparatus in this embodiment of this application may be an electronic device, or may be a component such as a circuit or a chip in the electronic device. The electronic device may be a terminal, or another device other than the terminal. For example, the electronic device may be a mobile phone, a tablet computer, a notebook computer, a palmtop computer, an in-vehicle electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like. This is not specifically limited in this embodiment of this application.

The independent display frame interpolation apparatus in this embodiment of this application may be an apparatus with an operating system. The operating system may be an Android (Android) operating system, an iOS operating system, or another possible operating system. This is not specifically limited in the embodiments of this application.

The independent display frame interpolation apparatus provided in this embodiment of this application can implement the processes of the foregoing method embodiments, and a same technical effect can be achieved. To avoid repetition, details are not described herein again.

An embodiment of this application further provides a System-on-a-Chip, where the System-on-a-Chip includes a processor and a communications interface, the communications interface is coupled to the processor, the processor is configured to generate first data based on first content to be displayed on an electronic device, where a frame rate of the first data is smaller than a frame rate of the first content, and the communications interface is configured to: in a case that a target TE signal sent by an independent display chip in the electronic device is received, send the first data to the independent display chip.

Optionally, in this embodiment of this application, the processor is specifically configured to perform frame loss processing on the first content based on a preset frame rate, to obtain first data at the preset frame rate.

Optionally, in this embodiment of this application, the communications interface is further configured to send a first instruction to the independent display chip, where the first instruction includes a preset frame rate. The communications interface is further configured to receive the target TE signal sent by the independent display chip, where a frequency value of the target TE signal is equal to a value of the preset frame rate.

Optionally, in this embodiment of this application, the target TE signal includes a plurality of TE signals. The communications interface is specifically configured to send one frame of data in the first data to the independent display chip every time when receiving one TE signal, so as to send a plurality of frames of data in the first data to the independent display chip.

The System-on-a-Chip provided in this embodiment of this application can implement the processes implemented by the System-on-a-Chip in the method embodiment, and a same technical effect can be achieved. To avoid repetition, details are not described herein again.

An embodiment of this application further provides an independent display chip, where the independent display chip includes a processor and a communications interface, the communications interface is coupled to the processor, the communications interface is configured to: send a target TE signal to a System-on-a-Chip in an electronic device, and receive first data sent by the System-on-a-Chip, where the first data is data generated by the System-on-a-Chip based on first content to be displayed on the electronic device, a frame rate of the first data is smaller than a frame rate of the first content; and the processor is configured to perform frame interpolation processing on the first data to obtain second data, and a frame rate of the second data is greater than or equal to the frame rate of the first content.

Optionally, in this embodiment of this application, the communications interface is further configured to receive a first instruction sent by the System-on-a-Chip, where the first instruction includes a preset frame rate. The processor is further configured to generate a target TE signal. The communications interface is further configured to send the target TE signal to the System-on-a-Chip, where a frequency value of the target TE signal is equal to a value of the preset frame rate.

Optionally, in this embodiment of this application, the first instruction further includes a target frame rate. The processor is specifically configured to perform frame interpolation processing on the first data by using the target frame rate, to obtain the second data.

Optionally, in this embodiment of this application, the target TE signal includes a plurality of TE signals. The communications interface is specifically configured to receive one frame of data in the first data sent by the System-on-a-Chip every time when sending one TE signal, so as to receive a plurality of frames of data in the first data sent by the System-on-a-Chip.

Optionally, in this embodiment of this application, the communications interface is further configured to: in a case that a first TE signal sent by a display unit in the electronic device is received, send the second data to the display unit, where a frequency value of the first TE signal is greater than or equal to a value of the frame rate of the second data.

The independent display chip provided in this embodiment of this application can implement the processes implemented by the independent display chip in the method embodiments, and a same technical effect can be achieved. To avoid repetition, details are not described herein again.

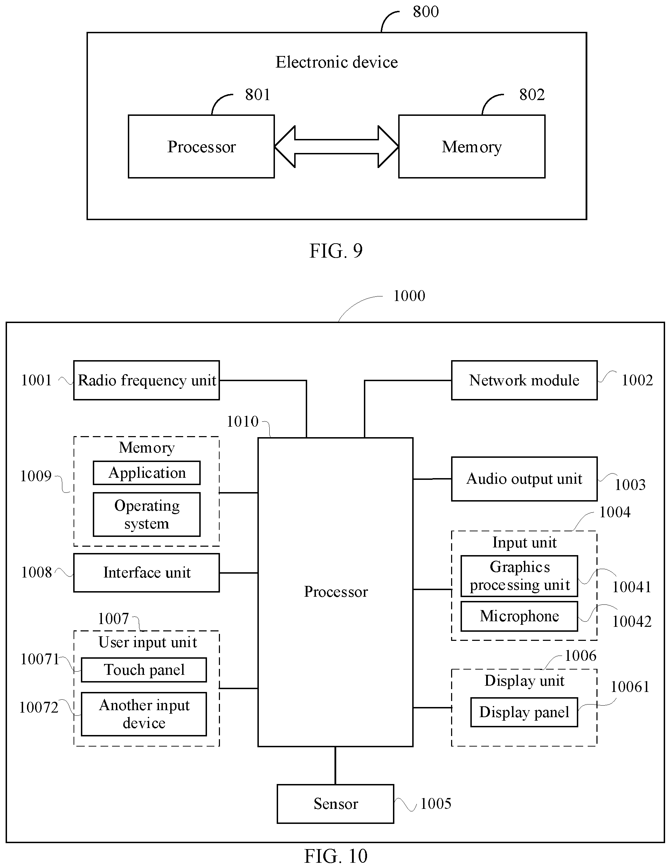

Optionally, as shown in FIG. 9, an embodiment of this application further provides an electronic device 800, including a processor 801, a memory 802, and a program or an instruction stored in the memory 802 and executable on the processor 801, where the program or the instruction is executed by the processor 801 to implement the steps of the foregoing independent display frame interpolation method embodiment, and a same technical effect can be achieved. To avoid repetition, details are not described herein again.

It should be noted that the electronic device in this embodiment of this application includes the foregoing mobile electronic device and the foregoing non-mobile electronic device.

FIG. 10 is a schematic diagram of a hardware structure of an electronic device according to an embodiment of this application.

An electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the electronic device 1000 may further include a power supply (such as a battery) that supplies power to each component. The power supply may be logically connected to the processor 1010 by using a power supply management system, to implement functions such as charging and discharging management, and power consumption management by using the power supply management system. The structure of the electronic device shown in FIG. 10 does not constitute a limitation on the electronic device. The electronic device may include components more or fewer than those shown in the diagram, a combination of some components, or different component arrangements. Details are not described herein.

The processor 1010 is configured to: generate first data based on first content to be displayed on the electronic device through a System-on-a-Chip in the electronic device, where a frame rate of the first data is smaller than a frame rate of the first content; in a case that the System-on-a-Chip receives a target TE signal sent by an independent display chip in the electronic device, send the first data to the independent display chip through the System-on-a-Chip; and perform frame interpolation processing on the first data through the independent display chip to obtain second data, where a frame rate of the second data is greater than or equal to the frame rate of the first content.

An embodiment of this application provides an electronic device, where the frame rate of the first data generated by the System-on-a-Chip is smaller than that of the first content displayed on the electronic device, that is, the output frame rate of the System-on-a-Chip is reduced. Then, the independent display chip can perform frame interpolation processing on the first data to obtain the second data, so as to improve or maintain the frame rate of the content displayed on the electronic device. In this way, the output frame rate of the System-on-a-Chip is reduced, and the problem that high power consumption of the System-on-a-Chip affects the independent display frame interpolation function can be avoided, thereby improving the fluency of the image displayed on the electronic device.

Optionally, in this embodiment of this application, the processor 1010 is specifically configured to perform frame loss processing on the first content based on a preset frame rate through the System-on-a-Chip, to obtain first data at the preset frame rate.

Optionally, in this embodiment of this application, the processor 1010 is further configured to: in a case that the System-on-a-Chip receives a target TE signal sent by an independent display chip in the electronic device, before sending the first data to the independent display chip through the System-on-a-Chip, send a first instruction to the independent display chip through the System-on-a-Chip, where the first instruction includes a preset frame rate. The processor 1010 is further configured to: generate the target TE signal through the independent display chip, and send the target TE signal to the System-on-a-Chip through the independent display chip, where a frequency value of the target TE signal is equal to a value of the preset frame rate.

Optionally, in this embodiment of this application, the first instruction further includes a target frame rate. The processor 1010 is specifically configured to perform frame interpolation processing on the first data through the independent display chip by using the target frame rate, to obtain the second data.

Optionally, in this embodiment of this application, the target TE signal includes a plurality of TE signals. The processor 1010 is specifically configured to send one frame of data in the first data to the independent display chip through the System-on-a-Chip every time when the System-on-a-Chip receives one TE signal, so as to send a plurality of frames of data in the first data to the independent display chip through the System-on-a-Chip.

Optionally, in this embodiment of this application, the processor 1010 is further configured to: after performing frame interpolation processing on the first data through the independent display chip to obtain second data, in a case that the independent display chip receives a first TE signal sent by a display unit in the electronic device, send the second data to the display unit through the independent display chip, where a frequency value of the first TE signal is greater than or equal to a value of the frame rate of the second data. The display unit 1006 is configured to display second content based on the second data.

The electronic device provided in this embodiment of this application can implement the processes of the foregoing method embodiments, with the same technical effects achieved. To avoid repetition, details are not described herein again.

For beneficial effect of the implementations in this embodiment, refer to the beneficial effect of the corresponding implementations in the foregoing method embodiment. To avoid repetition, details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

The memory 1009 may be configured to store a software program and various data. The memory 1009 may mainly include a first storage area for storing a program or an instruction and a second storage area for storing data. The first storage area may store an operating system, and an application or an instruction required by at least one function (for example, a sound playing function or an image playing function). In addition, the memory 1009 may be a volatile memory or a non-volatile memory, or the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1009 in this embodiment of this application includes but is not limited to these memories and any memory of another proper type.

The processor 1010 may include one or more processing units. Optionally, an application processor and a modem processor are integrated into the processor 1010. The application processor mainly processes an operating system, a user interface, an application, or the like. The modem processor mainly processes a wireless communication signal, for example, a baseband processor. It may be understood that, the modem processor may alternatively not be integrated into the processor 1010.

An embodiment of this application further provides a readable storage medium, where the readable storage medium stores a program or an instruction, and when the program or the instruction is executed by a processor, the processes of the foregoing independent display frame interpolation method embodiment are implemented by the electronic device, and a same technical effect can be achieved. To avoid repetition, details are not described herein again.

The processor is a processor in the electronic device in the foregoing embodiment. The readable storage medium includes a computer-readable storage medium, such as a computer read-only memory (ROM), a random access memory (RAM), a magnetic disk, or an optical disc.

An embodiment of this application provides a computer program product. The program product is stored in a storage medium, and the program product is executed by at least one processor to implement the processes of the foregoing independent display frame interpolation method embodiment by the electronic device, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. An independent display frame interpolation circuit, wherein the independent display frame interpolation circuit comprises a System-on-a-Chip and an independent display chip, wherein
the System-on-a-Chip is configured to: generate first data based on first content to be displayed, and send the first data to the independent display chip in a case that a target display frame rate synchronization (TE) signal sent by the independent display chip is received, wherein a frame rate of the first data is smaller than a frame rate of the first content; and the independent display chip is configured to perform frame interpolation processing on the first data to obtain second data, and a frame rate of the second data is greater than or equal to the frame rate of the first content.

2. The circuit according to claim 1, wherein the System-on-a-Chip is specifically configured to perform frame loss processing on the first content based on a preset frame rate, to obtain first data at the preset frame rate.

3. The circuit according to claim 1 or 2, wherein the System-on-a-Chip is further configured to send a first instruction to the independent display chip, and the first instruction comprises a preset frame rate; and the independent display chip is further configured to generate the target TE signal and send the target TE signal to the System-on-a-Chip, and a frequency value of the target TE signal is equal to a value of the preset frame rate.

4. The circuit according to claim 3, wherein the first instruction further comprises a target frame rate; and the independent display chip is specifically configured to perform frame interpolation processing on the first data by using the target frame rate to obtain the second data.

5. The circuit according to claim 1, wherein the target TE signal comprises a plurality of TE signals; and the System-on-a-Chip is specifically configured to send one frame of data in the first data to the independent display chip every time when one TE signal is received, so as to send a plurality of frames of data in the first data to the independent display chip.

6. The circuit according to claim 1, wherein the independent display frame interpolation circuit further comprises a display unit; the independent display chip is further configured to send the second data to the display unit in a case that a first TE signal sent by the display unit is received, and a frequency value of the first TE signal is greater than or equal to a value of the frame rate of the second data; and the display unit is configured to display second content based on the second data.

7. An independent display frame interpolation method, applied to an electronic device, and comprising:
generating first data based on first content to be displayed on the electronic device through a System-on-a-Chip in the electronic device, wherein a frame rate of the first data is smaller than a frame rate of the first content;
in a case that the System-on-a-Chip receives a target display frame rate synchronization (TE) signal sent by an independent display chip in the electronic device, sending the first data to the independent display chip through the System-on-a-Chip; and
performing frame interpolation processing on the first data through the independent display chip to obtain second data, wherein a frame rate of the second data is greater than or equal to the frame rate of the first content.

8. The method according to claim 7, wherein the generating first data based on first content to be displayed on the electronic device through a System-on-a-Chip in the electronic device comprises:
performing frame loss processing on the first content based on a preset frame rate through the System-on-a-Chip, to obtain first data at the preset frame rate.

9. The method according to claim 7 or 8, wherein before the in a case that the System-on-a-Chip receives a target TE signal sent by an independent display chip in the electronic device, sending the first data to the independent display chip through the System-on-a-Chip, the method further comprises:
sending a first instruction to the independent display chip through the System-on-a-Chip, wherein the first instruction comprises a preset frame rate; and
generating the target TE signal through the independent display chip, and sending the target TE signal to the System-on-a-Chip through the independent display chip, wherein a frequency value of the target TE signal is equal to a value of the preset frame rate.

10. The method according to claim 9, wherein the first instruction further comprises a target frame rate; and
the performing frame interpolation processing on the first data through the independent display chip to obtain second data comprises:
performing frame interpolation processing on the first data through the independent display chip by using the target frame rate, to obtain the second data.

11. The method according to claim 7, wherein the target TE signal comprises a plurality of TE signals; and
in a case that the System-on-a-Chip receives a target TE signal sent by an independent display chip in the electronic device, the sending the first data to the independent display chip through the System-on-a-Chip comprises:
sending one frame of data in the first data to the independent display chip through the System-on-a-Chip every time when the System-on-a-Chip receives one TE signal, so as to send a plurality of frames of data in the first data to the independent display chip through the System-on-a-Chip.

12. The method according to claim 7, wherein after the performing frame interpolation processing on the first data through the independent display chip to obtain second data, the method further comprises:
in a case that the independent display chip receives a first TE signal sent by a display unit in the electronic device, sending the second data to the display unit through the independent display chip, wherein a frequency value of the first TE signal is greater than or equal to a value of the frame rate of the second data; and
displaying second content based on the second data through the display unit.

13. An independent display frame interpolation apparatus, wherein the independent display frame interpolation apparatus comprises a generating module, a sending module, and a processing module;
the generating module is configured to generate first data based on first content to be displayed on the electronic device through a System-on-a-Chip in the electronic device, wherein a frame rate of the first data is smaller than a frame rate of the first content;
the sending module is configured to: in a case that the System-on-a-Chip receives a target display frame rate synchronization (TE) signal sent by an independent display chip in the electronic device, send the first data to the independent display chip through the System-on-a-Chip; and
the processing module is configured to perform frame interpolation processing on the first data through the independent display chip to obtain second data, wherein a frame rate of the second data is greater than or equal to the frame rate of the first content.

14. A System-on-a-Chip, wherein the System-on-a-Chip comprises a processor and a communications interface, the communications interface is coupled to the processor, the processor is configured to generate first data based on first content to be displayed on an electronic device, wherein a frame rate of the first data is smaller than a frame rate of the first content, and the communications interface is configured to: in a case that a target display frame rate synchronization (TE) signal sent by an independent display chip in the electronic device is received, send the first data to the independent display chip.

15. The System-on-a-Chip according to claim 14, wherein the processor is specifically configured to perform frame loss processing on the first content based on a preset frame rate, to obtain first data at the preset frame rate.

16. The System-on-a-Chip according to claim 14 or 15, wherein the communications interface is further configured to send a first instruction to the independent display chip, and the first instruction comprises a preset frame rate; and the communications interface is further configured to receive the target TE signal sent by the independent display chip, and a frequency value of the target TE signal is equal to a value of the preset frame rate.

17. The System-on-a-Chip according to claim 14, wherein the target TE signal comprises a plurality of TE signals; and the communications interface is specifically configured to send one frame of data in the first data to the independent display chip every time when one TE signal is received, so as to send a plurality of frames of data in the first data to the independent display chip.

18. An independent display chip, wherein the independent display chip comprises a processor and a communications interface, the communications interface is coupled to the processor, the communications interface is configured to: send a target display frame rate synchronization (TE) signal to a System-on-a-Chip in an electronic device, and receive first data sent by the System-on-a-Chip, wherein the first data is data generated by the System-on-a-Chip based on first content to be displayed on the electronic device, a frame rate of the first data is smaller than a frame rate of the first content; and the processor is configured to perform frame interpolation processing on the first data to obtain second data, and a frame rate of the second data is greater than or equal to the frame rate of the first content.

19. The independent display chip according to claim 18, wherein the communications interface is further configured to receive a first instruction sent by the System-on-a-Chip, and the first instruction comprises a preset frame rate; the processor is further configured to generate the target TE signal; and the communications interface is further configured to send the target TE signal to the System-on-a-Chip, and a frequency value of the target TE signal is equal to a value of the preset frame rate.

20. The independent display chip according to claim 19, wherein the first instruction further comprises a target frame rate; and the processor is specifically configured to perform frame interpolation processing on the first data by using the target frame rate to obtain the second data.

21. The independent display chip according to claim 18, wherein the target TE signal comprises a plurality of TE signals; and the communications interface is specifically configured to receive one frame of data in the first data sent by the System-on-a-Chip every time when one TE signal is sent, so as to receive a plurality of frames of data in the first data sent by the System-on-a-Chip.

22. The independent display chip according to claim 18, wherein in a case that a first TE signal sent by a display unit in the electronic device is received, the communications interface is further configured to send the second data to the display unit, wherein a frequency value of the first TE signal is greater than or equal to a value of the frame rate of the second data.

23. An electronic device, comprising the independent display frame interpolation circuit according to any one of claims 1 to 6, or comprising the System-on-a-Chip according to any one of claims 14 to 17 and the independent display chip according to any one of claims 18 to 22.

24. An electronic device, comprising a processor and a memory, wherein the memory stores a program or an instruction executable on the processor, and when the program or the instruction is executed by the processor, steps of the independent display frame interpolation method according to any one of claims 7 to 12 are implemented by the electronic device.

25. A readable storage medium, wherein the readable storage medium stores a program or an instruction, and when the program or the instruction is executed by a processor, steps of the independent display frame interpolation method according to any one of claims 7 to 12 are implemented by the electronic device.

26. An independent display frame interpolation apparatus, wherein the apparatus is configured to perform the independent display frame interpolation method according to any one of claims 7 to 12.
